# FASCICULE DE BREVET EUROPEEN

(11) **EP 4 313 634 B1**
(45) Date de publication et mention de la délivrance du brevet: **07.05.2025**
(21) Numéro de dépôt: 22717865.4
(22) Date de dépôt: 28.03.2022
(51) Int. Cl.: B60C 11/24

(54) **PROCÉDÉ DE DÉTERMINATION DE L'ÉTAT D'USURE D'UN FLANC DE PNEUMATIQUE POUR BUS URBAINS**
VERFAHREN ZUR BESTIMMUNG DES VERSCHLEISSZUSTANDS EINER REIFENSEITENWAND FÜR STADTBUSSE
METHOD FOR DETERMINING THE STATE OF WEAR OF A TIRE SIDEWALL FOR URBAN BUSES

(30) Priorité: 31.03.2021 FR 2103319
(43) Date de publication de la demande: 07.02.2024
(73) Titulaire: COMPAGNIE GENERALE DES ETABLISSEMENTS MICHELIN, 63000 Clermont-Ferrand (FR)
(72) Inventeur: DOMPROBST, Frédéric, 63040 CLERMONT-FERRAND Cedex 9 (FR); ARVIS, Vincent, 63040 CLERMONT-FERRAND Cedex 9 (FR); LHOSPITALIER, Denis, 63040 CLERMONT-FERRAND Cedex 9 (FR); MONTAGNER, Julien, 63040 CLERMONT-FERRAND Cedex 9 (FR)
(74) Mandataire: M.F.P. Michelin
(86) Numéro de dépôt international: PCT/FR2022/050573
(87) Numéro de publication internationale: WO 2022/208012

(56) Documents cités:
- IT-A1- 201800 003 254
- KR-B1- 101 981 887
- US-A1- 2021 031 569

## Description

La présente invention concerne un pneumatique pour un véhicule lourd à usage urbain, plus particulièrement un bus urbain, et a pour objet un procédé de détermination de l'état d'usure d'un flanc d'un tel pneumatique.

De façon générale un pneumatique comprend deux flancs qui sont deux portions latérales reliant une bande de roulement respectivement à deux bourrelets. La bande de roulement est positionnée à la circonférence du pneumatique et destinée à être usée au cours du roulage du pneumatique. Les bourrelets sont destinés à assurer le montage du pneumatique sur une jante.

Plus précisément un flanc comprend usuellement, de l'extérieur vers l'intérieur du pneumatique, au moins une couche extérieure de matière caoutchoutique, en contact avec l'air atmosphérique et comprenant généralement, sur une face extérieure, un ensemble de marquages en creux ou en relief, une armature de carcasse comprenant au moins une couche de renforts métalliques ou textiles enrobés dans un matériau caoutchoutique, et au moins une couche intérieure de matière caoutchoutique, destinée à être au contact avec le gaz de gonflage lorsque le pneumatique est monté et gonflé sur sa jante.

Il est connu que les pneumatiques pour bus urbain ont la particularité d'avoir des flancs épais, c'est-à-dire des flancs comprenant une couche extérieure de matière caoutchoutique ayant une épaisseur suffisante pour permettre une certaine abrasion de cette dernière avant que l'armature de carcasse soit exposée à des râpages contre les trottoirs. En effet, les flancs d'un pneumatique de bus urbain sont régulièrement soumis à des frottements contre les trottoirs au cours des manœuvres d'arrêt et de démarrage du bus. Ces frottements génèrent une abrasion de la couche extérieure de flanc, puis, lorsque celle-ci est totalement usée, une dégradation de l'armature de carcasse susceptible d'aboutir à sa rupture par éclatement, ce qui est préjudiciable à la sécurité des personnes présentes à proximité du bus urbain. Par conséquent, il est primordial de pouvoir estimer l'épaisseur résiduelle de la couche extérieure de flanc au cours de l'usage du pneumatique pour décider soit du retournement du pneumatique sur sa jante, pour exposer l'autre flanc, soit de son remplacement.

L'estimation de l'épaisseur résiduelle de couche extérieure de flanc à une date donnée est le plus souvent réalisée à l'aide d'une inspection visuelle du flanc destinée à évaluer la présence ou l'absence d'au moins un indicateur d'usure, formé dans le flanc. Un indicateur d'usure est généralement une cavité creusée dans la couche extérieure de flanc, à partir d'une face extérieure de flanc, cette cavité pouvant être de forme variable. Divers modes de réalisation d'un tel indicateur d'usure ont été décrits, à titre d'exemples, dans les documents KR 101981887B1, IT 2018 0000 3254 A1, US 2021/031569 A1, EP 3251958B1, JP 2014180904A, WO 2013118657A1, CN 201380726, JP 2003200717A et EP 0726173B1.

Toutefois l'inspection visuelle d'un indicateur d'usure n'est pas toujours aisée du fait d'un contraste visuel insuffisant entre l'indicateur d'usure et la portion de flanc qui l'entoure, en particulier dans le cas d'une inspection visuelle directe à l'œil nu. Par conséquent la présence ou l'absence d'un indicateur d'usure résulte souvent d'une appréciation subjective de l'observateur.

Pour programmer, de façon fiable, le retournement sur jante ou le remplacement des pneumatiques dont les flancs sont usés, indispensables à la garantie de la sécurité, tout exploitant de pneumatiques pour bus urbain a besoin d'un suivi précis de l'état d'usure du flanc de pneumatique, se traduisant par une estimation de la durée d'exploitation restante avant usure complète du flanc. Une mauvaise programmation des opérations de maintenance peut en outre causer des immobilisations intempestives des véhicules engageant des coûts supplémentaires d'exploitation.

Aussi les inventeurs se sont donnés pour objectif, pour un pneumatique pour véhicule lourd à usage urbain, en particulier pour bus urbain, de proposer un procédé de détermination de l'état d'usure d'un flanc d'un tel pneumatique, permettant d'automatiser et de fiabiliser la mesure de profondeur de l'indicateur d'usure à une date donnée, et donc l'estimation d'épaisseur résiduelle de la couche extérieure de flanc, et de déterminer une estimation de la durée d'exploitation restante du pneumatique.

Comme définie dans la revendication indépendante 1 en annexe, l'invention a pour objet un procédé de détermination de l'état d'usure d'un flanc de pneumatique pour véhicule lourd à usage urbain :
- ledit flanc comprenant au moins un indicateur d'usure en creux par rapport à une face extérieure de flanc, en contact avec l'air atmosphérique, et faisant contraste visuellement avec la face extérieure de flanc,
- ledit procédé de détermination de l'état d'usure du flanc comprenant:
   - une étape de capture de l'état de l'indicateur d'usure, à une date donnée Ti,
   - une étape de détermination de la profondeur Pi de l'indicateur d'usure, à la date donnée Ti,
   - une étape de détermination de la vitesse moyenne d'usure Vi de l'indicateur d'usure, à la date donnée Ti,
   - une étape d'estimation de la date prévisionnelle de maintenance M du pneumatique, à laquelle la profondeur de l'indicateur d'usure est nulle,
   - une étape de restitution d'au moins une information sur l'état d'usure du flanc et sur la date prévisionnelle de maintenance Mi du pneumatique.

L'invention vise de façon essentielle à estimer le niveau d'usure d'un flanc de pneumatique pour bus urbain à tout instant de la vie du pneumatique, ainsi que la date prévisionnelle de maintenance du pneumatique, soit par retournement sur jante, soit par remplacement du pneumatique, et de communiquer ces informations à l'exploitant du véhicule pour lui permettre de planifier son intervention. La date donnée Ti de détermination de l'état d'usure du flanc correspond à une date d'inspection programmée ou à un kilométrage réalisé ou à un niveau d'usure donné de la bande de roulement du pneumatique. Cette détermination a lieu sur un pneumatique monté sur le véhicule et concerne donc le flanc positionné à l'extérieur du véhicule.

Avantageusement l'étape de capture de l'état de l'indicateur d'usure est une étape de prise de vue de l'indicateur d'usure par un moyen optique automatique.

Par moyen optique automatique, on entend, à titre d'exemples non exhaustifs, un système de prise de vue tel qu'un appareil photographique ou une caméra. Utiliser un tel système de prise de vue placé au niveau du sol et photographiant l'intégralité du flanc du pneumatique, lorsque le véhicule est à l'arrêt, permet :
- De voir toutes les zones du flanc donc tous les indicateurs d'usure éventuellement présents sur le flanc et de prendre en compte les irrégularités circonférentielles des niveaux de râpage,
- De réaliser des calibrations de distance réelle / image grâce à la dimension de la roue,
- D'avoir un temps d'analyse réduit.

Selon un premier mode de réalisation, l'étape de prise de vue de l'indicateur d'usure est réalisée à l'aide d'un moyen optique automatique positionné perpendiculairement au flanc, de telle façon qu'un système d'éclairage du flanc émette des rayons lumineux compris dans un angle, centré sur une normale au flanc passant par le centre de rotation du pneumatique, au plus égal à 60°.

Dans ce cas le système de prise de vue est positionné sensiblement perpendiculairement au flanc dans un secteur angulaire d'au plus 60°.

Selon un deuxième mode de réalisation, l'étape de prise de vue de l'indicateur d'usure est réalisée à l'aide d'un moyen optique automatique positionné tangentiellement au flanc, de telle façon qu'un système d'éclairage du flanc émette des rayons lumineux compris dans un angle formant, avec une tangente à la face extérieure du flanc, au plus égal à 30°.

Dans ce cas le système de prise de vue est positionné sensiblement tangentiellement au flanc dans un secteur angulaire d'au plus 30° par rapport à la tangente au flanc. Le système de prise de vue peut être placé soit du côté de la partie avant de la bande roulement, soit du côté de la partie arrière de la bande de roulement, le pneumatique étant monté sur le véhicule.

Avantageusement, ledit indicateur d'usure comprenant des moyens permettant de déterminer sa profondeur à la date donnée Ti, l'étape de détermination de la profondeur de l'indicateur d'usure est une étape d'observation et/ou de mesure des moyens de l'indicateur d'usure.

Un mode de réalisation préféré d'indicateur d'usure, comprenant des moyens permettant de déterminer sa profondeur à la date donnée Ti, est un indicateur d'usure ayant une section débouchante sur la face extérieure de flanc contenant un cercle inscrit dont le diamètre décroît continûment avec l'usure du flanc, et ayant une paroi intérieure non lisse, comprenant une répartition d'éléments en relief ou en creux par rapport à la paroi intérieure, et/ou une texture en relief par rapport à la paroi intérieure, de telle sorte que ladite paroi intérieure fait contraste visuellement avec la face extérieure de flanc. Par cercle inscrit on entend un cercle tangent intérieurement au contour de la surface débouchante. Le diamètre du cercle, c'est-à-dire la portion de section débouchante qu'il délimite, diminue de façon continue au fur et à mesure de l'abrasion de la couche extérieure de flanc.

La paroi intérieure de l'indicateur d'usure fait avantageusement contraste visuellement grâce à :
- soit des éléments en relief ou en creux par rapport à la paroi intérieure, tels que, par exemple et de manière non exhaustive, des stries,
- soit une texture en relief telle que, par exemple et de manière non exhaustive, une texture de type « velours » constituée de brins et/ou de lames, telle que décrite par exemple dans les documents WO 2007045425 et WO 2011036061,
- soit une combinaison des deux moyens précédents.

Ces deux types de moyens, présents sur la paroi intérieure, ont une double fonction :
- d'une part, permettre de déterminer, à tout niveau d'usure du flanc, la profondeur résiduelle de la cavité en creux constituant l'indicateur d'usure, c'est-à-dire l'épaisseur résiduelle de la couche extérieure de flanc en matériau caoutchoutique dans laquelle est creusé l'indicateur d'usure,
- et, d'autre part, garantir un bon contraste entre l'indicateur d'usure et la portion de flanc qui l'entoure, et, par conséquent, une meilleure visibilité de l'indicateur d'usure garantissant une meilleure fiabilité de la détermination de l'épaisseur résiduelle de couche extérieure de flanc.

En outre la section débouchante de tout indicateur d'usure a un contour pouvant, par exemple, être circulaire, ou être multilobé, c'est-à-dire comprenant au moins deux lobes. La forme de ce contour peut être évolutive en fonction de l'usure du flanc : par exemple, un contour multilobé à l'état neuf peut devenir circulaire à partir d'un certain niveau d'usure.

Pour ce mode de réalisation particulier d'indicateur d'usure, la détermination de sa profondeur à la date donnée Ti est donc basée sur la mesure des dimensions de sa section débouchante, caractérisée en particulier par le diamètre du cercle inscrit à ladite section débouchante, et/ou l'analyse de la forme de sa section débouchante, lesdites dimensions et/ou ladite forme de la section débouchante étant corrélées à une profondeur de l'indicateur d'usure.

Encore avantageusement l'étape de détermination de la vitesse moyenne d'usure Vi de l'indicateur d'usure est une étape de calcul d'un ratio Vi=(Pi-Pr) /(Ti-Tr), Pi et Pr étant les profondeurs respectives de l'indicateur d'usure (6) à la date donnée Ti et à une date de référence Tr antérieure à Ti.

La connaissance de la vitesse moyenne d'usure Vi de l'indicateur d'usure à la date donnée Ti permet de connaître la cinétique d'usure du flanc, dans le contexte d'usage du pneumatique. Cette vitesse moyenne est calculée entre la date Ti et une date de référence Tr antérieure à Ti. La date de référence Tr peut être prise égale à la date initiale T0 de montage du pneumatique sur le véhicule, le pneumatique étant alors dans un état neuf, avec une profondeur initiale d'indicateur d'usure égale à P0.

Avantageusement l'étape d'estimation de la date prévisionnelle de maintenance Mi du pneumatique, à laquelle la profondeur de l'indicateur d'usure Pi est nulle, est une étape de détermination du temps ti, compté à partir de la date Ti, au bout duquel la profondeur de l'indicateur d'usure Pi est nulle dans l'hypothèse d'une vitesse moyenne d'usure Vi de l'indicateur d'usure.

La connaissance de la vitesse moyenne d'usure Vi de l'indicateur d'usure à la date donnée Ti permet, par extrapolation en supposant cette vitesse constante, de déterminer le temps nécessaire à l'atteinte d'une profondeur nulle de l'indicateur d'usure, c'est-à-dire une abrasion complète de la couche extérieure du flanc, avec généralement une épaisseur résiduelle de matériau entre le fond de l'indicateur d'usure et l'armature de carcasse pour la protection de celle-ci.

Le plus souvent l'étape de restitution comprend une étape d'affichage sur une interface à destination d'un utilisateur. Une telle étape d'affichage permet d'avoir une restitution visuelle directe à l'utilisateur qui réalise le suivi du pneumatique, d'où un gain de temps.

Préférentiellement l'étape de restitution comprend une information relative à une profondeur Pi de l'indicateur d'usure à la date donnée Ti.

L'étape de restitution comprend avantageusement une information relative à un taux d'usure U=(P0-Pi) /P0 du flanc, à la date donnée Ti, P0 étant la profondeur initiale de l'indicateur d'usure, mesurée sur le flanc à l'état neuf et Pi étant la profondeur de l'indicateur d'usure, mesurée sur le flanc à la date donnée Ti.

L'étape de restitution comprend préférentiellement une information relative à une estimation de la date prévisionnelle de maintenance à laquelle la profondeur de l'indicateur d'usure est nulle.

Le plus souvent le procédé de détermination de l'état d'usure d'un flanc de pneumatique comprend une étape d'identification du pneumatique. Il est en effet nécessaire de bien identifier le pneumatique, en tant qu'individu, pour pouvoir suivre l'évolution de son usure de flanc et décider de son retournement sur jante ou de son remplacement éventuel. En effet, du fait de leurs caractéristiques de fabrication respectives et de leurs positions différentes sur le véhicule, deux pneumatiques ont généralement des cinématiques d'usure de flanc différenciées.

Préférentiellement le procédé de détermination de l'état d'usure d'un flanc de pneumatique comprenant une étape d'identification du pneumatique par reconnaissance d'un marquage individualisé ou par lecture d'un identifiant RFID (Radio Frequency Identification Data) du pneumatique.

Selon un premier mode d'identification, le marquage individualisé du pneumatique, consistant en une suite de chiffres, est généralement capturé, ce marquage pouvant être mis en valeur, par exemple par un repérage à la craie qui permet un contraste avec le reste du pneumatique. Selon un deuxième mode d'identification, un identifiant RFID (Radio Frequency Identification Data), implanté dans le pneumatique, par exemple par l'intermédiaire d'une étiquette collée, contient des données d'identification du pneumatique qui peuvent être lues par un moyen adapté.

Avantageusement le procédé de détermination de l'état d'usure d'un flanc de pneumatique comprend une étape d'identification de l'indicateur d'usure sur le pneumatique identifié. L'usure du flanc n'est pas nécessairement uniforme sur tout le pourtour du flanc. Dans ces conditions, il peut être intéressant d'avoir plusieurs indicateurs d'usure sur un même flanc, répartis sur le pourtour du flanc, pour déterminer une usure moyenne du flanc : d'où l'intérêt de pouvoir repérer chaque indicateur d'usure pour lui associer les caractéristiques d'usure mesurées.

Encore avantageusement le procédé de détermination de l'état d'usure d'un flanc de pneumatique comprend une étape de transmission d'informations capturées vers une base de données. Il est en effet avantageux d'avoir une base de données à distance, évitant de stocker en local trop d'informations.

L'invention a également pour un objet un système de mise en œuvre du procédé de détermination de l'état d'usure d'un flanc de pneumatique selon l'un quelconque des modes de réalisation du procédé précédemment décrits.

Le système de mise en œuvre d'un procédé de détermination de l'état d'usure d'un flanc de pneumatique comprend :
- des moyens de capture,
- des moyens de transmission de données,
- des moyens d'analyse,
- une base de données.

Avantageusement le système de mise en œuvre d'un procédé de détermination de l'état d'usure d'un flanc de pneumatique comprend des moyens d'affichage sur l'état d'usure du flanc.

Encore avantageusement, dans le système de mise en œuvre d'un procédé de détermination de l'état d'usure d'un flanc de pneumatique, les moyens de capture et/ou les moyens d'affichage et/ou les moyens de transmission de données et/ou les moyens d'analyse sont mis en œuvre par un dispositif optoélectronique.

Les caractéristiques de l'invention seront mieux comprises à l'aide des figures 1 à 5C, non représentées à l'échelle :
- Figure 1 : Représentation schématique du dispositif de détermination de l'état d'usure d'un flanc de pneumatique monté sur un bus urbain,
- Figure 2 : Positionnement du moyen optique automatique (ou système de prise de vue) par rapport au pneumatique monté sur un essieu de bus urbain,
- Figure 3 : Vue en perspective d'un pneumatique pour bus urbain comprenant un indicateur d'usure,
- Figure 4 : Vue en coupe méridienne d'un pneumatique pour bus urbain comprenant un indicateur d'usure,
- Figure 5A : Vue de face d'un indicateur d'usure ayant une section débouchante à contour circulaire avec des stries circulaires concentriques en relief par rapport à la paroi intérieure,
- Figure 5B : Vue de face d'un indicateur d'usure ayant une section débouchante à contour circulaire avec des stries circulaires concentriques en relief par rapport à la paroi intérieure et une texture entre les stries,
- Figure 5C : Vue de face d'un indicateur d'usure ayant une section débouchante à contour multilobé (4 lobes).

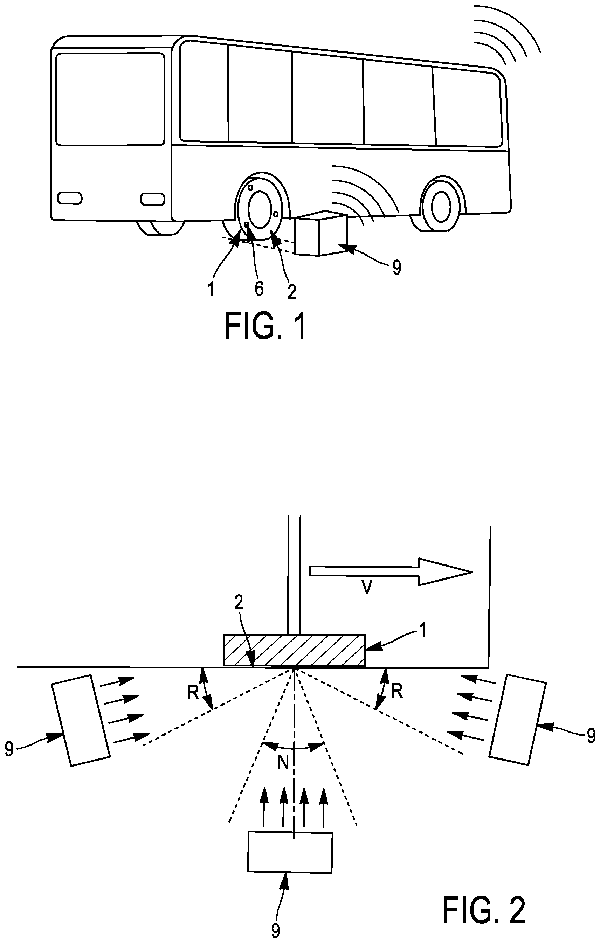

La figure 1 est une représentation schématique du dispositif de détermination de l'état d'usure d'un flanc de pneumatique monté sur un bus urbain. La figure 1 décrit en particulier l'étape de prise de vue d'un indicateur d'usure 6, formé dans un flanc 2 du pneumatique 1 par un moyen optique automatique 9. Le moyen optique automatique 9 est placé à proximité du flanc 2, côté extérieur du véhicule, pour réaliser la prise de vue de l'indicateur d'usure 6. Le moyen optique automatique 9 est placé au niveau du sol, de façon à photographier l'intégralité du flanc du pneu lorsque le véhicule est à l'arrêt. Ce positionnement permet en particulier de voir toutes les zones du flanc, donc tous les indicateurs d'usure éventuellement présents, et de prendre en compte les irrégularités circonférentielles de niveau de râpage sur le flanc. De plus des calibrations de distance réelle / image sont possibles par rapport la dimension de la roue. En outre, le moyen optique automatique 9 permet la transmission d'informations capturées (identifiant du pneumatique, identifiant de l'indicateur d'usure, profondeur de l'indicateur d'usure, date prévisionnelle de maintenance du pneumatique) vers une base de données.

La figure 2 schématise le positionnement du moyen optique automatique (ou système de prise de vue) par rapport au pneumatique monté sur un essieu de bus urbain. Selon un premier mode de réalisation, le moyen optique automatique 9 est positionné perpendiculairement au flanc 2, de telle façon qu'un système d'éclairage du flanc 2 émette des rayons lumineux compris dans un angle N, centré sur une normale au flanc 2 passant par le centre de rotation du pneumatique 1, au plus égal à 60°. Selon un deuxième mode de réalisation, le moyen optique automatique 9 est positionné tangentiellement au flanc 2, de telle façon qu'un système d'éclairage du flanc 2 émette des rayons lumineux compris dans un angle R formant, avec une tangente à la face extérieure du flanc 2, au plus égal à 30°. Dans ce dernier cas le système de prise de vue peut être placé soit du côté de la partie avant de la bande roulement, soit du côté de la partie arrière de la bande de roulement, les parties avant et arrière étant définies par rapport au sens de roulage V du véhicule.

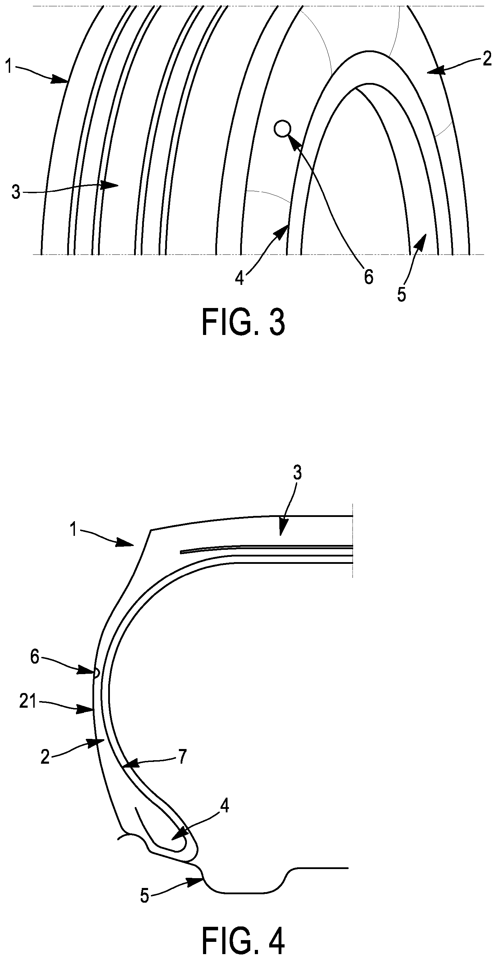

La figure 3 est une vue en perspective d'un pneumatique 1 pour bus urbain comprenant un indicateur d'usure 6. Le pneumatique 1 comprend deux flancs 2 reliant une bande de roulement 3 destinée à entrer en contact avec un sol, respectivement à deux bourrelets 4, destinés à entrer en contact avec une jante 5.

La figure 4 est une vue en coupe méridienne d'un pneumatique 1 pour bus urbain comprenant un indicateur d'usure 6. Cette vue représente une moitié de section méridienne de pneumatique. Le flanc 2 comprend, sur une face extérieure de flanc 21 en contact avec l'air atmosphérique, un indicateur d'usure 6 en creux dans une couche de matériau caoutchoutique axialement extérieure à une armature de carcasse 8 s'enroulant dans chaque bourrelet 4 monté sur la jante 5.

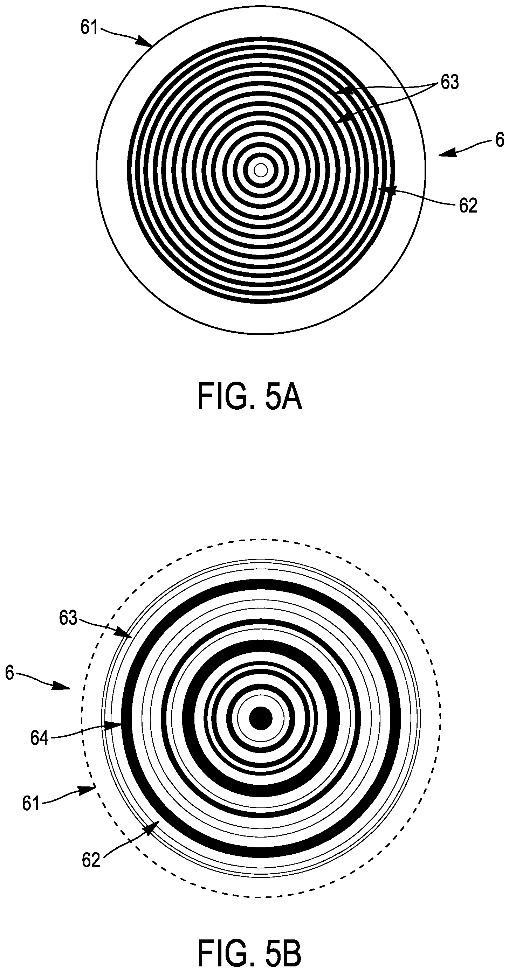

La figure 5A est une vue de face d'un indicateur d'usure 6 ayant une section débouchante 61 à contour circulaire avec des stries circulaires concentriques 63 en relief par rapport à la paroi intérieure 62.

La figure 5B est une vue de face d'un indicateur d'usure 6 ayant une section débouchante 61 à contour circulaire combinant des stries circulaires concentriques 63 en relief par rapport à la paroi intérieure 62 et une texture 64 entre les stries.

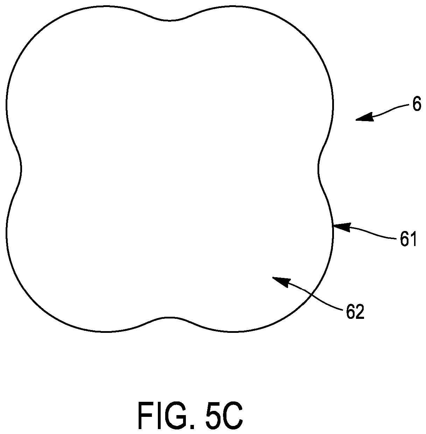

La figure 5C est une vue de face d'un indicateur d'usure 6 ayant une section débouchante 61 à contour multilobé (4 lobes) et une paroi intérieure 62.

L'invention a été plus particulièrement étudiée dans le cas d'un pneumatique de dimension 275/70R22.5 X Incity Michelin, destiné à équiper un bus urbain. Pour un tel pneumatique, la pression de gonflage recommandée est égale à 9 bars, la charge statique recommandée est égale à 3550 kg et la vitesse maximale recommandée est égale à 100 km/h.

Deux types d'indicateurs d'usure, formés dans le flanc du pneumatique d'étude, ont été analysés en application du procédé de détermination de l'état d'usure d'un flanc, selon l'invention : un premier type d'indicateur d'usure ayant une section débouchante avec un contour circulaire, et un deuxième type d'indicateur d'usure ayant une section débouchante avec un contour à 4 lobes. Dans les deux cas, à l'état neuf du flanc, le diamètre du cercle inscrit à la section débouchante est égal à 22 mm, et la profondeur de l'indicateur d'usure est égale à 5 mm. Le premier type comprend des stries circulaires, réparties selon un pas égal à 2 mm et ayant une hauteur égale à 0.5 mm et une épaisseur égale à 5 mm, et/ou comprend une texture. Le deuxième type comprend ou non une texture. Une analyse de ces indicateurs d'usure, à divers niveaux d'usure du flanc, conformément au procédé selon l'invention, a démontré la fiabilité de la détermination de la profondeur de l'indicateur d'usure.

## Revendications

1. Procédé de détermination de l'état d'usure d'un flanc (2) de pneumatique (1) pour véhicule lourd à usage urbain :
- ledit flanc (2) comprenant au moins un indicateur d'usure (6) en creux par rapport à une face extérieure de flanc, en contact avec l'air atmosphérique, et faisant contraste visuellement avec la face extérieure de flanc,
- ledit procédé de détermination de l'état d'usure du flanc (2) **étant caractérisé par** :
- une étape de capture de l'état de l'indicateur d'usure (6), à une date donnée Ti,
- une étape de détermination de la profondeur Pi de l'indicateur d'usure (6), à la date donnée Ti,
- une étape de détermination de la vitesse moyenne d'usure Vi de l'indicateur d'usure (6), à la date donnée Ti,
- une étape d'estimation de la date prévisionnelle de maintenance Mi du pneumatique (1), à laquelle la profondeur de l'indicateur d'usure (6) est nulle,
- une étape de restitution d'au moins une information sur l'état d'usure du flanc (2) et sur la date prévisionnelle de maintenance Mi du pneumatique (1).

2. Procédé de détermination de l'état d'usure d'un flanc (2) de pneumatique (1) selon la revendication 1 **dans lequel** l'étape de capture de l'état de l'indicateur d'usure (6) est une étape de prise de vue de l'indicateur d'usure (6) par un moyen optique automatique (9).

3. Procédé de détermination de l'état d'usure d'un flanc (2) de pneumatique (1) selon la revendication 2 **dans lequel** l'étape de prise de vue de l'indicateur d'usure (6) est réalisée à l'aide d'un moyen optique automatique (9) positionné perpendiculairement au flanc (2), de telle façon qu'un système d'éclairage du flanc (2) émette des rayons lumineux compris dans un angle (N), centré sur une normale au flanc (2) passant par le centre de rotation du pneumatique (1), au plus égal à 60°.

4. Procédé de détermination de l'état d'usure d'un flanc (2) de pneumatique (1) selon la revendication 2 **dans lequel** l'étape de prise de vue de l'indicateur d'usure (6) est réalisée à l'aide d'un moyen optique automatique (9) positionné tangentiellement au flanc (2), de telle façon qu'un système d'éclairage du flanc (2) émette des rayons lumineux compris dans un angle (R) formant, avec une tangente à la face extérieure du flanc (2), au plus égal à 30°.

5. Procédé de détermination de l'état d'usure d'un flanc (2) de pneumatique (1) selon l'une quelconque des revendications 1 à 4, ledit indicateur d'usure (6) comprenant des moyens permettant de déterminer sa profondeur à la date donnée Ti, **dans lequel** l'étape de détermination de la profondeur de l'indicateur d'usure (6) est une étape d'observation et/ou de mesure des moyens de l'indicateur d'usure (6).

6. Procédé de détermination de l'état d'usure d'un flanc (2) de pneumatique (1) selon la revendication 5 **dans lequel** l'étape de détermination de la vitesse moyenne d'usure Vi de l'indicateur d'usure (6) est une étape de calcul d'un ratio Vi=(Pi-Pr) /(Ti-Tr), Pi et Pr étant les profondeurs respectives de l'indicateur d'usure (6) à la date donnée Ti et à une date de référence Tr antérieure à Ti.

7. Procédé de détermination de l'état d'usure d'un flanc (2) de pneumatique (1) selon la revendication 6 **dans lequel** l'étape d'estimation de la date prévisionnelle de maintenance du pneumatique (1), à laquelle la profondeur de l'indicateur d'usure (6) est nulle, est une étape de détermination du temps ti, compté à partir de la date Ti, au bout duquel la profondeur de l'indicateur d'usure (6) est nulle dans l'hypothèse d'une vitesse moyenne d'usure Vi de l'indicateur d'usure (6).

8. Procédé de détermination de l'état d'usure d'un flanc (2) de pneumatique (1) selon l'une quelconque des revendications 1 à 7 **dans lequel** l'étape de restitution comprend une étape d'affichage sur une interface à destination d'un utilisateur.

9. Procédé de détermination de l'état d'usure d'un flanc (2) de pneumatique (1) selon l'une quelconque des revendications 1 à 8 **dans lequel** l'étape de restitution comprend une information relative à une profondeur Pi de l'indicateur d'usure (6) à la date donnée Ti.

10. Procédé de détermination de l'état d'usure d'un flanc (2) de pneumatique (1) selon l'une quelconque des revendications 1 à 9 **dans lequel** l'étape de restitution comprend une information relative à un taux d'usure U=(P0-Pi) /P0 du flanc (2), à la date donnée Ti, P0 étant la profondeur initiale de l'indicateur d'usure (6), mesurée sur le flanc (2) à l'état neuf, et Pi étant la profondeur de l'indicateur d'usure (6), mesurée sur le flanc (2) à la date donnée Ti.

11. Procédé de détermination de l'état d'usure d'un flanc (2) de pneumatique (1) selon l'une quelconque des revendications 1 à 10 **dans lequel** l'étape de restitution comprend une information relative à une estimation de la date prévisionnelle de maintenance à laquelle la profondeur de l'indicateur d'usure (6) est nulle.

12. Procédé de détermination de l'état d'usure d'un flanc (2) de pneumatique (1) selon l'une quelconque des revendications 1 à 11 **comprenant** une étape d'identification du pneumatique.

13. Procédé de détermination de l'état d'usure d'un flanc (2) de pneumatique (1) selon l'une quelconque des revendications 1 à 12 **comprenant** une étape d'identification du pneumatique par reconnaissance d'un marquage individualisé ou par lecture d'un identifiant RFID (Radio Frequency Identification Data) du pneumatique.

14. Procédé de détermination de l'état d'usure d'un flanc (2) de pneumatique (1) selon l'une quelconque des revendications 12 ou 13 **comprenant** une étape d'identification de l'indicateur d'usure (6) sur le pneumatique identifié.

15. Procédé de détermination de l'état d'usure d'un flanc (2) de pneumatique (1) selon l'une quelconque des revendications 1 à 14 **comprenant** une étape de transmission d'informations capturées vers une base de données.

## Patentansprüche

1. Verfahren zur Bestimmung des Verschleißzustands einer Flanke (2) eines Reifens (1) für ein schweres Fahrzeug für den urbanen Einsatz:
- wobei die Flanke (2) mindestens einen Verschleißanzeiger (6) umfasst, der in Bezug auf eine Flankenaußenseite vertieft ist, mit der atmosphärischen Luft in Kontakt ist und mit der Flankenaußenseite optisch kontrastiert,
- wobei das Verfahren zur Bestimmung des Verschleißzustands der Flanke (2) **gekennzeichnet ist durch**:
- einen Schritt des Erfassens des Zustands des Verschleißanzeigers (6) an einem gegebenen Datum Ti,
- einen Schritt des Bestimmens der Tiefe Pi des Verschleißanzeigers (6) an dem gegebenen Datum Ti,
- einen Schritt des Bestimmens der mittleren Verschleißgeschwindigkeit Vi des Verschleißanzeigers (6) an dem gegebenen Datum Ti,
- einen Schritt des Schätzens des voraussichtlichen Wartungsdatums Mi des Reifens (1), an dem die Tiefe des Verschleißanzeigers (6) null ist,
- einen Schritt des Ausgebens mindestens einer Information zum Verschleißzustand der Flanke (2) und zum voraussichtlichen Wartungsdatum Mi des Reifens (1).

2. Verfahren zur Bestimmung des Verschleißzustands einer Flanke (2) eines Reifens (1) nach Anspruch 1, wobei der Schritt des Erfassens des Zustands des Verschleißanzeigers (6) ein Schritt des Aufnehmens des Verschleißanzeigers (6) mit einer automatischen optischen Einrichtung (9) ist.

3. Verfahren zur Bestimmung des Verschleißzustands einer Flanke (2) eines Reifens (1) nach Anspruch 2, wobei der Schritt des Aufnehmens des Verschleißanzeigers (6) mithilfe einer automatischen optischen Einrichtung (9) ausgeführt wird, die senkrecht zu der Flanke (2) positioniert ist, so dass ein System zur Beleuchtung der Flanke (2) Lichtstrahlen aussendet, die in einem Winkel (N), der auf eine durch den Rotationsmittelpunkt des Reifens (1) verlaufende Normale zu der Flanke (2) zentriert ist, von höchstens 60° enthalten sind.

4. Verfahren zur Bestimmung des Verschleißzustands einer Flanke (2) eines Reifens (1) nach Anspruch 2, wobei der Schritt des Aufnehmens des Verschleißanzeigers (6) mithilfe einer automatischen optischen Einrichtung (9) ausgeführt wird, die tangential zu der Flanke (2) positioniert ist, so dass ein System zur Beleuchtung der Flanke (2) Lichtstrahlen aussendet, die in einem Winkel (R) enthalten sind, der mit einer Tangente zur Außenseite der Flanke (2) höchstens 30° bildet.

5. Verfahren zur Bestimmung des Verschleißzustands einer Flanke (2) eines Reifens (1) nach einem der Ansprüche 1 bis 4, wobei der Verschleißanzeiger (6) Einrichtungen umfasst, die es ermöglichen, seine Tiefe an dem gegebenen Datum Ti zu bestimmen, wobei der Schritt des Bestimmens der Tiefe des Verschleißanzeigers (6) ein Schritt des Beobachtens und/oder des Messens der Einrichtungen des Verschleißanzeigers (6) ist.

6. Verfahren zur Bestimmung des Verschleißzustands einer Flanke (2) eines Reifens (1) nach Anspruch 5, wobei der Schritt des Bestimmens der mittleren Verschleißgeschwindigkeit Vi des Verschleißanzeigers (6) ein Schritt des Berechnens eines Quotienten Vi=(Pi-Pr) /(Ti-Tr) ist, wobei Pi und Pr die jeweiligen Tiefen des Verschleißanzeigers (6) an dem gegebenen Datum Ti und an einem vor Ti liegenden Referenzdatum Tr sind.

7. Verfahren zur Bestimmung des Verschleißzustands einer Flanke (2) eines Reifens (1) nach Anspruch 6, wobei der Schritt des Schätzens des voraussichtlichen Wartungsdatums des Reifens (1), an dem die Tiefe des Verschleißanzeigers (6) null ist, ein Schritt des Bestimmens der Zeit ti, gerechnet ab dem Datum Ti, ist, nach der die Tiefe des Verschleißanzeigers (6) unter der Annahme einer mittleren Verschleißgeschwindigkeit Vi des Verschleißanzeigers (6) null ist.

8. Verfahren zur Bestimmung des Verschleißzustands einer Flanke (2) eines Reifens (1) nach einem der Ansprüche 1 bis 7, wobei der Schritt des Ausgebens einen Schritt des Anzeigens auf einer Schnittstelle für einen Benutzer umfasst.

9. Verfahren zur Bestimmung des Verschleißzustands einer Flanke (2) eines Reifens (1) nach einem der Ansprüche 1 bis 8, wobei der Schritt des Ausgebens eine Information bezüglich einer Tiefe Pi des Verschleißanzeigers (6) an dem gegebenen Datum Ti umfasst.

10. Verfahren zur Bestimmung des Verschleißzustands einer Flanke (2) eines Reifens (1) nach einem der Ansprüche 1 bis 9, wobei der Schritt des Ausgebens eine Information bezüglich einer Verschleißrate U=(P0-Pi) /P0 der Flanke (2) an dem gegebenen Datum Ti umfasst, wobei P0 die anfängliche Tiefe des Verschleißanzeigers (6) ist, die an der Flanke (2) im Neuzustand gemessen wird, und wobei Pi die Tiefe des Verschleißanzeigers (6) ist, die an der Flanke (2) an dem gegebenen Datum Ti gemessen wird.

11. Verfahren zur Bestimmung des Verschleißzustands einer Flanke (2) eines Reifens (1) nach einem der Ansprüche 1 bis 10, wobei der Schritt des Ausgebens eine Information bezüglich einer Schätzung des voraussichtlichen Wartungsdatums umfasst, an dem die Tiefe des Verschleißanzeigers (6) null ist.

12. Verfahren zur Bestimmung des Verschleißzustands einer Flanke (2) eines Reifens (1) nach einem der Ansprüche 1 bis 11, umfassend einen Schritt des Identifizierens des Reifens.

13. Verfahren zur Bestimmung des Verschleißzustands einer Flanke (2) eines Reifens (1) nach einem der Ansprüche 1 bis 12, umfassend einen Schritt des Identifizierens des Reifens durch Erkennen einer individualisierten Kennzeichnung oder durch Lesen einer RFID-Kennung (Radio Frequency Identification Data) des Reifens.

14. Verfahren zur Bestimmung des Verschleißzustands einer Flanke (2) eines Reifens (1) nach einem der Ansprüche 12 oder 13, umfassend einen Schritt des Identifizierens des Verschleißanzeigers (6) an dem identifizierten Reifen.

15. Verfahren zur Bestimmung des Verschleißzustands einer Flanke (2) eines Reifens (1) nach einem der Ansprüche 1 bis 14, umfassend einen Schritt des Übertragens von erfassten Informationen zu einer Datenbank.

## Claims

1. Method for determining the state of wear of a sidewall (2) of a tyre (1) for a heavy-duty vehicle for urban use:
- said sidewall (2) comprising at least one wear indicator (6) which is recessed in relation to an outer face of the sidewall, is in contact with the atmospheric air, and visually contrasts with the outer face of the sidewall,
- said method for determining the state of wear of the sidewall (2) **being characterized by:**
- a step of sensing the state of the wear indicator (6) on a given date Ti,
- a step of determining the depth Pi of the wear indicator (6) on the given date Ti,
- a step of determining the mean rate of wear Vi of the wear indicator (6) on the given date Ti,
- a step of estimating the provisional date of maintenance Mi for the tyre (1) when the depth of the wear indicator (6) will be zero,
- a step of outputting at least one item of information about the state of wear of the sidewall (2) and about the provisional date of maintenance Mi for the tyre (1).

2. Method for determining the state of wear of a sidewall (2) of a tyre (1) according to Claim 1, **wherein** the step of sensing the state of the wear indicator (6) is a step of acquiring an image of the wear indicator (6) via an automatic optical means (9).

3. Method for determining the state of wear of a sidewall (2) of a tyre (1) according to Claim 2, **wherein** the step of acquiring an image of the wear indicator (6) is carried out using an automatic optical means (9) positioned perpendicularly to the sidewall (2) such that a system for illuminating the sidewall (2) emits light rays comprised within an angle (N) at most equal to 60° centred on a normal to the sidewall (2) that passes through the centre of rotation of the tyre (1).

4. Method for determining the state of wear of a sidewall (2) of a tyre (1) according to Claim 2, **wherein** the step of acquiring an image of the wear indicator (6) is carried out using an automatic optical means (9) positioned tangentially to the sidewall (2) such that a system for illuminating the sidewall (2) emits light rays comprised within an angle (R) that forms at most equal to 30° with a tangent to the outer face of the sidewall (2).

5. Method for determining the state of wear of a sidewall (2) of a tyre (1) according to any one of Claims 1 to 4, said wear indicator (6) comprising means for determining its depth on the given date Ti, **wherein** the step of determining the depth of the wear indicator (6) is a step of observing and/or measuring the means of the wear indicator (6).

6. Method for determining the state of wear of a sidewall (2) of a tyre (1) according to Claim 5, **wherein** the step of determining the mean rate of wear Vi of the wear indicator (6) is a step of calculating a ratio Vi=(Pi-Pr)/(Ti-Tr), with Pi and Pr being the depths of the wear indicator (6) on the given date Ti and on a reference date Tr prior to Ti, respectively.

7. Method for determining the state of wear of a sidewall (2) of a tyre (1) according to Claim 6, **wherein** the step of estimating the provisional date of maintenance for the tyre (1), when the depth of the wear indicator (6) will be zero, is a step of determining the time ti, starting from the date Ti, after which the depth of the wear indicator (6) will be zero assuming a mean rate of wear Vi of the wear indicator (6).

8. Method for determining the state of wear of a sidewall (2) of a tyre (1) according to any one of Claims 1 to 7, **wherein** the outputting step comprises a step of displaying on an interface for a user.

9. Method for determining the state of wear of a sidewall (2) of a tyre (1) according to any one of Claims 1 to 8, **wherein** the outputting step comprises information relating to a depth Pi of the wear indicator (6) on the given date Ti.

10. Method for determining the state of wear of a sidewall (2) of a tyre (1) according to any one of Claims 1 to 9, **wherein** the outputting step comprises information relating to an amount of wear U=(P0-Pi) /P0 of the sidewall (2) on the given date Ti, with P0 being the initial depth of the wear indicator (6) measured on the sidewall (2) when it is new, and Pi being the depth of the wear indicator (6) measured on the sidewall (2) on the given date Ti.

11. Method for determining the state of wear of a sidewall (2) of a tyre (1) according to any one of Claims 1 to 10, **wherein** the outputting step comprises information relating to an estimation of the provisional date of maintenance when the depth of the wear indicator (6) will be zero.

12. Method for determining the state of wear of a sidewall (2) of a tyre (1) according to any one of Claims 1 to 11, **comprising** a step of identifying the tyre.

13. Method for determining the state of wear of a sidewall (2) of a tyre (1) according to any one of Claims 1 to 12, **comprising** a step of identifying the tyre by recognizing an individual marking or by reading an RFID (Radio Frequency Identification Data) identifier of the tyre.

14. Method for determining the state of wear of a sidewall (2) of a tyre (1) according to either of Claims 1 and 13, **comprising** a step of identifying the wear indicator (6) on the identified tyre.

15. Method for determining the state of wear of a sidewall (2) of a tyre (1) according to any one of Claims 1 to 14, **comprising** a step of sending information that has been recorded to a database.
